(19)

Europäisches
Patentamt
European
Patent Office
Office européen
des brevets

(11) **EP 1 852 458 A1**

(12) **EUROPEAN PATENT APPLICATION**
published in accordance with Art. 158(3) EPC

(43) Date of publication:
**07.11.2007 Bulletin 2007/45**

(51) Int Cl.:
*C08J 3/12* (2006.01)        *C08J 3/22* (2006.01)
*C08L 23/00* (2006.01)        *C08L 27/12* (2006.01)

(21) Application number: **06712710.0**

(22) Date of filing: **31.01.2006**

(86) International application number:
**PCT/JP2006/301567**

(87) International publication number:
**WO 2006/080528 (03.08.2006 Gazette 2006/31)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **31.01.2005 JP 2005024338**

(71) Applicant: **DAIKIN INDUSTRIES, LTD.**
**Osaka-shi, Osaka 530-8323 (JP)**

(72) Inventors:
• **MIYAMORI, Tsuyoshi**
**Nishihitotsuya, Settsu-shi, Osaka, 56685 (JP)**

• **KOMIYA, Yoshichika**
**Nishihitotsuya, Settsu-shi, Osaka, 56685 (JP)**
• **INUI, Kunihiko**
**Nishihitotsuya, Settsu-shi, Osaka, 56685 (JP)**

(74) Representative: **HOFFMANN EITLE**
**Patent- und Rechtsanwälte**
**Arabellastrasse 4**
**81925 München (DE)**

(54) **METHOD FOR PRODUCING FINELY PULVERIZED FLUORORUBBER**

(57)  The present invention provides a method of producing a fluororubber fine powder which method does not need any freeze grinding temperature but enables grinding even at ordinary temperature, to a fluororubber fine powder which can be prepared by the method, and to a composition comprising the fluororubber fine powder as a processing aid. This invention is a method of producing a fluororubber fine powder comprising fine pulverization step of subjecting a fluororubber powder to fine pulverization treatment at a temperature of an atmosphere ranging from a temperature not lower than the glass transition temperature of a fluororubber constituting the fluororubber powder to a temperature higher by 100°C than the glass transition temperature.

EP 1 852 458 A1

**Description**

TECHNICAL FIELD

The present invention relates to a method of producing a fluororubber fine powder, a fluororubber fine powder, a molding composition, a masterbatch and a molded article.

BACKGROUND ART

Fluororubbers are excellent in thermal stability, oil resistance and chemical resistance, among others, and therefore are processed into moldings and, further, are used as powder coating materials (cf. e.g. Patent Document 1: Japanese Kokai (Laid-open) Publication H01-139657; page 3, lower right column). Fluororubbers, when added in minor amounts to such resins as polyethylene, can serve as processing aids for improving the moldability of the resins and, on the other hand, it is proposed that fluororubbers be modified and functionalized by mixing them with nitrile rubbers, silicone rubbers and the like to give polymer blends (cf. e.g. Non-Patent Document 1: Takaomi Satokawa (ed.): "Fussojushi Handobukku (Fluororesin Handbook)", published November 30, 1990 by Nikkan Kogyo Shimbun Ltd., page 592, pages 605-606). For these purposes, fluororubbers are generally used in the form of powders.
Known as the method of producing powdered fluororubbers are, among others, the method comprising spray drying an aqueous fluororubber emulsion obtained by emulsion polymerization at a temperature of about 121 to 177°C (cf. e.g. Patent Document 2: Japanese Kokai Publication S50-84650 (Scope of Claim for Patent)) and the method comprising drying a granular fluororubber obtained by coagulation and isolation from a fluororubber dispersion at a temperature of an atmosphere of 50 to 110°C in a state fluidized by hot air from below (cf. e.g. Patent Document 3: Japanese Kokai Publication S52-76360 (pages 1-3)).
However, fluororubbers become soft at temperatures above the respective glass transition temperatures and, at the temperatures employed in the powdering methods mentioned above, they show tackiness. Thus, it is a problem that particles resulting from powdering sticks to one another to form lumps.
For reducing the stickiness of fluororubbers, the technique of freeze grinding (also called refrigeration grinding) which comprises grinding fluororubbers at a temperature of an atmosphere lower than the respective glass transition temperatures has been put to practical use (cf. e.g. Patent Document 1). However, the technique of freeze grinding has problems; it requires equipment and energy for lowering the grinding temperature to fairly low levels.
The surface of fluororubber particles obtained by grinding is preferably coated with such an anti-blocking agent as barium sulfate. Since, however, the fluororubber particles are in a rigid state on the occasion of grinding in the manner of freeze grinding, a separate step of coating is required after temperature reconditioning following grinding so that efficient and uniform coating may be accomplished (cf. e.g. Patent Document 1).

DISCLOSURE OF INVENTION

PROBLEMS WHICH THE INVENTION IS TO SOLVE

In view of the above-discussed state of the art, it is an object of the present invention to provide a method of producing a fluororubber fine powder which method does not need any freeze grinding temperature but enables grinding even at ordinary temperature, to a fluororubber fine powder which can be prepared by the method, and to a composition comprising the fluororubber fine powder as a processing aid.

MEANS FOR SOLVING THE PROBLEMS

The present invention is a method of producing a fluororubber fine powder comprising fine pulverization step of subjecting a fluororubber powder to fine pulverization treatment at a temperature of an atmosphere ranging from a temperature not lower than the glass transition temperature of a fluororubber constituting the fluororubber powder to a temperature higher by 100°C than said glass transition temperature.
The present invention is a fluororubber fine powder containing 25 to 65% by mass of particles having a particle diameter of 0.7 to 1.3 times the average particle diameter relative to the whole particles.
The present invention is a molding composition comprising a melt-processable resin and a processing aid, the processing aid comprising the above-mentioned fluororubber fine powder.
The present invention is a masterbatch comprising the above-mentioned fluororubber fine powder and a melt-processable resin (A).
The present invention is a molded article being obtained by molding the-above molding composition.
In the following, the invention is described in detail.

The method of producing a fluororubber fine powder according to the invention comprises fine pulverization step of subjecting a fluororubber powder to fine pulverizing treatment.

In the practice of the invention, the fluoropolymer constituting the fluororubber powder is not particularly restricted but may be any of those noncrystalline polymers which contain carbon-bound fluorine atoms and have rubber elasticity (hereinafter such polymers are sometimes referred to as "elastomeric fluoropolymers"), including those known in the art.

In the practice of the invention, the fluororubber powder may comprise one single species among the fluoropolymers mentioned above or two or more of the fluoropolymers mentioned above.

As the fluoropolymers, there may be mentioned vinylidene fluoride [VdF] copolymers and tetrafluoroethylene [TFE] copolymers, among others.

The VdF copolymers include VdF/hexafluoropropylene [HFP] copolymers, VdF/chlorotrifluoroethylene [CTFE] copolymers, VdF/TFE copolymers, VdF/perfluoro(alkyl vinyl ether) [PAVE] copolymers, VdF/TFE/HFP copolymers, VdF/TFE/CTFE copolymers and VdF/TFE/PAVE copolymers, among others.

The TFE copolymers include TFE/propylene copolymers and TFE/PAVE copolymers, among others.

In the practice of the invention, VdF-based copolymers are preferred as the above-mentioned elastomeric fluoropolymers; fluorocopolymers derived from 25 to 85 mole percent of VdF and 75 to 15 mole percent of at least one other monomer copolymerizable with VdF are more preferred, and fluorocopolymers derived from 50 to 80 mole percent of VdF and 50 to 20 mole percent of at least one other monomer copolymerizable with VdF are particularly preferred. Among them, VdF/HFP copolymers and VdF/TFE/HFP copolymers are still more preferred.

In the present specification, the "VdF unit" or a like monomer unit is a moiety in the molecular structure of the copolymer as derived from the corresponding monomer and, when it is derived from VdF, for instance, the monomer unit means the one represented by $-[CF_2-CH_2]-$

The above-mentioned fluoropolymer preferably has a glass transition temperature of -40°C to 0°C, more preferably -30°C to -5°C.

In the present specification, the glass transition temperature of each fluororubber fine powder is the value measured using a differential scanning calorimeter (product of SEIKO) at a temperature rising rate of 20°C/minute.

The above-mentioned fluoropolymer can be prepared by such a polymerization technique known in the art as emulsion polymerization or suspension polymerization and it can generally be obtained as small fluororubber pieces (also referred to as "crumbs") after such after-treatment as coagulation.

The above-mentioned fluororubber powder is only required to be in powder form at least at the time of the start of a procedure for rendering the same into a fine powder form.

As the fluororubber powder, there may be mentioned, for example, the fluororubber crumbs obtained by the above-mentioned polymerization crushed, after drying if necessary, to a size of about scores of centimeters, for instance, and then roughly ground to an average particle diameter of about a few to several millimeters, preferably 1 to 5 mm (a set of particles having such an average particle diameter is hereinafter referred to as "powder" for short).

The crushing of the fluororubber crumbs can be carried out using a shear crusher (cutting type) or a compression crusher (twin-screw type), for instance. The rough grinding of the crushing product can be carried out by means of a cutter type grinder, for instance. Generally, the fine pulverizing treatment in the practice of the invention can be carried out as the step following the above-mentioned rough grinding.

The crushing of the fluororubber crumbs, the rough grinding of the crushed product and the fine pulverizing treatment can generally be carried out batchwise but, if appropriate equipment is available, may be carried out continuously. In the case of continuous operation, the fluororubber to be treated occurs as a powder (fluororubber powder) at least at the time of the start of fine pulverization in the continuous process. Therefore, when the above steps are carried out continuously, it is not always necessary to regard the "fluororubber powder" as the product to be subjected to fine pulverization.

The fine pulverization step in the method of producing a fluororubber fine powder according to the invention is the step of subjecting the above-mentioned fluororubber powder to fine pulverization treatment.

The fine pulverization treatment is carried out at a temperature of an atmosphere ranging from a temperature not lower than the glass transition temperature of the fluororubber constituting the fluororubber powder to a temperature higher by 100°C than the glass transition temperature of the fluororubber (hereinafter sometimes referred to as "temperature of an atmosphere within the specific range").

Since the fine pulverizing treatment in the practice of the invention is carried out at a temperature of an atmosphere within the specific range, it is not necessary to adjust the temperature to a level for freeze grinding, unlike in the above-mentioned prior art methods for producing fluororubber fine powders. Further, the fluororubber during fine pulverization treatment has an appropriate level of softness, so that even when such an anti-blocking agent as described later herein is fed on the occasion of fine pulverization treatment, the particle surface of the fluororubber fine powder can be uniformly coated with the agent.

The lower limit to the temperature of the atmosphere in which the fine pulverization treatment is carried out is preferably higher than the glass transition temperature, more preferably higher by 20°C than the glass transition temperature of the fluororubber used, from the viewpoint of improving the anti-blocking agent adhesion to the fluororubber fine powder particle surface. A preferred upper limit to the temperature of the atmosphere in which the fine pulverization treatment is carried out is preferably set at a temperature higher by 80°C than the glass transition temperature of the fluororubber used from the viewpoint of preventing caking among fluororubber fine powder particles.

The fine pulverization treatment to be employed in the method for producing a fluororubber fine powder is not particularly restricted but may be any of those by which a fluororubber powder can be finely pulverized in the above-mentioned temperature of an atmosphere within the specific range. Thus, the treatment can be carried out using, for example, a high-speed rotary mill, roller tumbling mill, auto-fall mil, ball mill, medium agitation type mill or any of various grinding mills described in Tables on pages 8 to 10 of "Saishin Chobifunsai Purosesu Gijutu Sogo Siryoshu (Comprehensive Data Concerning Newest Superfine Pulverization Process Technologies)" (planned and edited by Soft Giken Shuppanbu, published March 31, 1985 by ShinGijutsu Joho Center).

The fine pulverization treatment is preferably carried out using a high-speed rotary mill, in particular a disk mill.

The basic principle of a disk mill generally consists in feeding a material to be pulverized to the space between a disk and another disk for finely pulverizing the material by a mortar-like rotation between the disks.

Preferred as the above-mentioned disk mill is one having a grinding section constituted of a disk rotating at a high speed and a fixed disk disposed opposing to the rotating disk. The material to be finely pulverized is generally a powder.

As the disk mill, there may·be mentioned, for example, one in which the powder as a material to be finely pulverized is fed to the middle portion of the fixed disk and is led to a pulverizing area for pulverization by means of the centrifugal force due to the high-speed rotation of the rotating disk.

Each disk is preferably provided with grooves on the disk surface facing the pulverization area, and the grooves are formed in radial directions, for instance.

The fine pulverization is effected by shearing, friction and so forth between the grooves.

In the disk mill, it is generally possible to adjust the particle diameter of the fluororubber fine powder to be obtained, and the particle diameter adjustment is generally accomplished by adjusting the distance between the disks, without the need of using a screen.

Generally, the disk mill also has a mechanism for discharging the finely pulverized product from the pulverization area by means of the centrifugal force due to the high-speed rotation of the disk and collecting the pulverization product by a dust collector or the like.

Further, the disk mill preferably has a heat generation suppressing mechanism using cooling water or a large quantity of air, for instance, so that the physical properties of the finely pulverized material may not be affected by the heat generation caused by the high-speed rotation of the disk.

The disk mill is sometimes also referred to as "mortar-like mill", "attrition or abrasion mill", etc.

In the practice of the invention, Turbo Grinder TG300 (product of Matsubo Corp.) and Disk Mill PM300 (product of Makino Mfg. Co.), for instance, can be used as the disk mill.

The method of producing a fluororubber fine powder according to the invention is preferably carried out while also feeding an anti-blocking agent for the fluororubber fine powder.

In the fluororubber fine powder as obtained by the fine pulverization treatment according to the invention, when the particle surface is coated with an anti-blocking agent, particles of the fluororubber fine powder are markedly prevented from being adhered among them.

In the practice of the invention, the anti-blocking agent is not particularly restricted but may be any of those generally used as plasticizers, fillers, colorants, acid acceptors and heat stabilizers, for instance. The anti-blocking agent is used for preventing the fluororubber fine powder from caking and the amount thereof is preferably as small as possible.

As the plasticizers, there may be mentioned dioctyl phthalate and dicresyl phthalate, among others.

As the fillers, there may be mentioned barium sulfate, calcium carbonate, graphite, talc and silica, among others.

As the colorants, there may be mentioned titanium oxide, iron oxide, molybdenum oxide and like metal oxides.

As the acid acceptors, there may be mentioned magnesium oxide, calcium oxide and lead oxide, among others.

As the heat stabilizers, there may be mentioned calcium stearate and magnesium stearate, among others.

Fillers are preferred as the anti-blocking agent, and talc, calcium carbonate and the like are more preferred.

The anti-blocking agent preferably has an average particle diameter of not smaller than about 1 $\mu$m but smaller than about 10 $\mu$m.

The above-mentioned average particle diameter of the anti-blocking agent is the value measured according to ASTM D 1457.

These anti-blocking agents, in particular the fillers, may be surface-treated with a coupling agent or the like according to need.

The method of feeding the anti-blocking agent onto the fluororubber fine powder particle surface is not particularly restricted. Since, however, the fine pulverization treatment in the practice of the invention is carried out at a temperature of an atmosphere within the above-mentioned specific range, a fluororubber fine powder with the particle surface being coated with an anti-blocking agent can be obtained if only the anti-blocking agent is fed to the fluororubber fine powder when it is at a temperature within said specific range.

The anti-blocking agent is preferably fed simultaneously with the fine pulverization although it may be fed while the fluororubber fine powder still has softness after fine pulverization, or after providing the fluororubber fine powder that has once lost its softness again with softness by heating, for instance. Thus, in the practice of the invention, the fine pulverization treatment is preferably carried out simultaneously with the feeding of the anti-blocking agent. In the fine pulverization treatment, the anti-blocking agent is preferably fed from the central portion of the fixed disk in the disk mill mentioned above and preferably in the form of a mixture with the fluororubber powder.

The amount of the anti-blocking agent can be properly selected according to the fluororubber species in powder form to be used and the amount thereof, among others. Generally, however, the anti-blocking agent is preferably fed in an amount of 1 to 15 parts by mass per 100 parts by mass of the fluororubber powder.

The amount of the anti-blocking agent is more preferably not smaller than 2 parts by mass but not greater than 12 parts by mass per 100 parts by mass of the fluororubber powder.

The fluororubber fine powder as obtained from the production method according to the invention generally has an average particle diameter of 100 to 800 $\mu$m.

From the viewpoint of ease of mixing with melt-processable resin, which is to be described later herein, the fluororubber fine powder preferably has an average particle diameter of not smaller than 200 $\mu$m, more preferably not smaller than 260 $\mu$m. The average particle diameter is preferably not greater than 600 $\mu$m, more preferably not greater than 500 $\mu$m.

The above-mentioned average particle diameter of the fluororubber fine powder is the value measured in accordance with JIS K 6891-1995. The average particle diameter (d50) is determined based on the particle diameter measurement results obtained in accordance with JIS K 6891-1995 by plotting the sieve opening ($\mu$m) against the cumulative percentage (%) of the weight of particles as obtained by classification to draw a logarithmic graph and reading the particle diameter corresponding to the cumulative percentage of 50% or by determining a straight line by the least squares method and calculating the particle diameter for 50%.

The fluororubber fine powder generally shows the same physical properties (particle diameter distribution, apparent density, percent change upon tapping, etc.) as those of the fluororubber fine powder of the invention, which is described later herein.

The fluororubber fine powder as produced by the above-described production method of the invention is a novel one.

The fluororubber fine powder according to the invention contains 25 to 65% by mass of particles having a particle diameter of 0.7 to 1.3 times the average particle diameter relative to the whole particles.

As the fluoropolymer constituting the fluororubber fine powder of the present invention, there may be mentioned the same ones as the elastomeric fluoropolymers enumerated as examples referring to the above-mentioned production method of the invention.

The fluororubber fine powder of the invention generally has an average particle diameter of 100 to 800 $\mu$m. A preferred lower limit to the above-mentioned average particle diameter is 200 $\mu$m, a more preferred lower limit thereto is 260 $\mu$m, while a preferred upper limit thereto is 600 $\mu$m, and a more preferred upper limit is 500 $\mu$m.

The proportion of those particles 0.7 to 1.3 times the average particle diameter in the fluororubber fine powder of the invention is preferably not higher than 55% by mass, more preferably not higher than 45% by mass.

In the present specification, the above-mentioned proportion of particles (particle size distribution) is the value measured according to JIS K 6891-1995.

The fluororubber fine powder according to the invention may show a percent change of 77 to 90% upon tapping.

The percent change upon tapping is preferably not lower than 80% and may be not lower than 82%.

The percent change upon tapping is the value determined from the following equation:

$$\texttt{Percent change upon tapping (\%) = }(h_1/h_0)\texttt{ x 100}$$

(In the above equation, $h_0$ is the height of the fluororubber fine powder placed in a cylindrical container having an inside diameter of 30 mm and a height of 71 mm according to the method of apparent density measurement according to JIS K 6891 and $h_1$ is the height of the fluororubber fine powder in the container after 2 minutes of shaking of the fluororubber fine powder-packed container fixed on a ro-tap sieve shaker (product of Iida Seisakusho).)

The fluororubber fine powder of the invention can be preferably produced by carrying out the above-mentioned production method of the invention.

The fluororubber fine powder of the invention preferably has an apparent density of 0.80 to 0.88 g/cm$^3$.

The apparent density is more preferably not lower than 0.82 g/cm$^3$, still more preferably not lower than 0.83

g/cm$^3$.

The fluororubber fine powder of the invention has a particle size distribution within the above range and generally shows a percent change upon tapping within the range mentioned above, so that the particles are relatively uniform in shape and can be uniformly mixed with a melt-processable resin or the like with ease. Therefore, the fluororubber fine powder can be suitably used as a processing aid or as a material for improving the processability and/or surface characteristics in producing various moldings and is particularly suited for use as a processing aid in molding melt-processable resins.

The molding composition of the invention is a molding composition comprising a melt-processable resin and a processing aid. The above-mentioned processing aid comprises the fluororubber fine powder of the invention.

As the melt-processable resin is preferably a thermoplastic resin in view of easy moldability thereof.

The melt-processable resin is not particularly restricted but includes, among others, polyolefin resins such as polyethylene and polypropylene; polyamide [PA] resins such as nylon 6, nylon 11, nylon 12, nylon 46, nylon 66, nylon 610, nylon 612 and nylon MXD6; polyesters such as polyethylene terephthalate [PET], polybutylene terephthalate [PBT], polyarylates, aromatic polyesters (including liquid crystal polyesters) and polycarbonates [PC]; polyacetal [POM] resins; polyether resins such as polyphenylene oxide [PPO], modified polyphenylene ether and polyetheretherketones [PEEK]; polyamideimide [PAI] resins such as polyaminobismaleimide; polysulfone resins such as polysulfones [PSF] and polyethersulfones [PES]; vinyl polymers such as ABS resins and poly-4-methylpentene-1 (TPX resins) and, further, polyphenylene sulfide [PPS], polyketonesulfides, polyetherimides and polyimides [PI]. The above-mentioned nylon MXD6 is a crystalline polycondensate obtained from metaxylenediamine (MXD) and adipic acid.

Polyolefin resins and PA resins are preferred among the melt-processable resins mentioned above, and polyolefin resins are more preferred.

The melt-processable resins may be used singly or two or more of them may be used in combination.

Those melt-processable resins which have a melt processing temperature of 100 to 350°C are preferred. The melt-processable resins may have crystallinity or may have no crystallinity.

When they have crystallinity, the melt-processable resins are preferably the ones having a melting point of 80 to 300°C, more preferably a melting point of 100 to 200°C.

When they have no crystallinity, the melt-processable resins preferably have a processing temperature range almost equivalent to those of the melt-processable resins having crystallinity and having the melting range given above.

The melt-processable resins mentioned above can be synthesized by any of the conventional methods properly selected according to the species thereof.

The melt-processable resins may be in the form of powders, granules or pellets, for instance. From the viewpoint that the melt-processable resin can be melted efficiently and the processing aid can be dispersed therein in the molding composition to be obtained, the form of pellets is preferred.

The processing aid mentioned above comprises a fluororubber fine powder, and those described hereinabove are suitably used as the fluororubber fine powder. The processing aid is required to comprise a fluororubber fine powder and may be, for example, a masterbatch described later herein.

In the molding composition according to the invention, the fluororubber fine powder preferably accounts for 0.005 to 1% by mass of the sum of the total mass of the melt-processable resin(s) and the mass of the fluororubber fine powder. The content of the fluororubber fine powder in the molding composition of the invention may be within the above range at least on the occasion of molding or like processing of the molding composition and, for example in the case of once preparing a masterbatch, which is to be mentioned later herein, the above content is relative to the total mass of the masterbatch and one or more of various molding materials such as melt-processable resins, added to the masterbatch. When the fluororubber fine powder content is lower than 0.005% by mass, the reductions in extrusion pressure and expression torque may be sometimes insufficient on the occasion of molding of the molding composition and, at content levels exceeding 1% by mass, the moldings obtained may be cloudy or turbid in some cases and the effect of the incorporation of the fluororubber fine powder will become no more proportional to the addition level in certain instances and this is uneconomical.

A more preferred lower limit to the content of the fluororubber fine powder is 0.01% by mass of the total mass mentioned above, and a more preferred upper limit is 0.5% by mass.

The molding composition of the invention may be in the form of a powder, granules or pellets, for instance.

The molding composition of the invention may contain, together with the fluororubber fine powder and the melt-processable resin(s), one or more other components or ingredients as incorporated therein according to need.

The other components are not particularly restricted but use may be made of, for example, reinforcing agents such as glass fibers and glass powders; stabilizers such as minerals and flakes; lubricants such as silicone oils and molybdenum disulfide; pigments; electrically conductive materials such as carbon black; impact resistance improvers such as rubbers; and, further, those additives listed in the positive list edited as a self-regulatory standard by the Japan Hygienic Olefin and Styrene Plastics Association, among others.

The masterbatch of the invention comprises the above-mentioned fluororubber fine powder of the invention and a melt-processable resin (A) and can be suitably used as a processing aid in molding melt-processable resins.

Also suitably used as the fluororubber fine powder in the masterbatch of the invention are those mentioned hereinabove.

Also suitably used as the melt-processable resin (A) are those melt-processable resins mentioned hereinabove.

The masterbatch of the invention is not restricted with respect to the form thereof but may be in the form of a powder, granules or pellets, for instance. Since, however, the fluororubber fine powder is retained in a finely dispersed state in the melt-processable resin (A), the form of pellets prepared by melt kneading is preferred.

The content of the fluororubber fine powder in the masterbatch of the invention is preferably higher than 0.5% by mass but not higher than 20% by mass relative to the sum of the mass of the melt-processable resin (A) and the mass of the fluororubber fine powder since the melt molding to be mentioned later herein becomes easy then.

A more preferred lower limit to the content of the fluororubber fine powder is 1% by mass of the sum of the masses mentioned above, a still more preferred lower limit is 2% by mass, and a more preferred upper limit is 10% by mass.

The masterbatch of the invention may be one comprising, together with the fluororubber fine powder and the melt-processable resin (A), one or more other components or ingredients incorporated therein according to need.

The other components are not particularly restricted but use may be made of, for example, reinforcing agents such as fibers and glass powders; stabilizers such as minerals and flakes; lubricants such as silicone oils and molybdenum disulfide; pigments; electrically conductive materials such as carbon black; impact resistance improvers such as rubbers; and, further, those additives listed in the positive list edited as a self-regulatory standard by the Japan Hygienic Olefin and Styrene Plastics Association, among others.

The masterbatch of the invention can be obtained by compounding the fluororubber fine powder and the melt-processable resin (A) by various means known in the art.

The masterbatch of the invention can take the form containing the fluororubber fine powder uniformly dispersed among the particles of the melt-processable resin (A) and, therefore, when used in molding or like processing, it can produce good moldability-improving effects, for example in lowering the extrusion torque and extrusion pressure.

On the occasion of molding using the masterbatch obtained, the fluororubber fine powder fully produces a lubricating effect in particular from the stage of initiating melting to the stage of shape formation in the molten state by abundantly occurring on the machine inside surface with which the molding material is contacting and thus makes it possible to smoothly transfer the molding material within the molding machine. It is presumable that as a result, the moldability/processability be improved, for example the extrusion torque and extrusion pressure be markedly reduced.

The masterbatch of the invention is excellent in moldability/processability and can be suitably added to various molding materials.

The molding composition of the invention comprises the above-mentioned fluororubber fine powder and can improve the moldability/processability, for example lower the extrusion pressure, and can be readily plasticized and can properly produce moldings by various methods of molding.

For example, the molding may be carried out by causing the fluororubber fine powder to coexist with the melt-processable resin in the molding machine such as an extruder.

The above-mentioned molding technique is not particularly restricted but includes extrusion molding, injection molding, rotary molding and blow molding, among others. Among them, extrusion molding is preferred so that the moldability/processability improving effect may be effectively produced.

The molding mentioned above can be carried out by molding the molding composition of the invention. The molding composition may be one prepared in advance for feeding to the molding machine for melting and extrusion, for instance, or the processing aid and the melt-processable resin are fed to the molding machine simultaneously for melting and extrusion, for instance, or, more specifically, the masterbatch and the melt-processable resin are fed to the molding machine simultaneously for melting and extrusion, for instance, or the fluororubber fine powder and the melt-processable resin are fed to the molding machine simultaneously for melting and extrusion, for instance.

The various conditions on the occasion of the above molding are not particularly restricted but the molding can be carried out in the conventional manner.

The molding temperature is generally not lower than the melting point of the melt-processable resin. Within the range mentioned above, the molding temperature is generally lower than the temperature which is the lower of the decomposition temperature of the fluororubber fine powder and the decomposition temperature of the melt-processable resin. The molding temperature is, for example, 100 to 350°C. In the case of extrusion molding, the molding temperature is also referred to as extrusion temperature.

The above molding is carried out using the molding composition of the invention, namely in the coexistence of the fluororubber fine powder and the melt-processable resin and, therefore, the particles of the fluororubber fine powder are in the state uniformly covering the melt-processable resin particles in the step of molding, as mentioned hereinabove, and, in the case of the fluororubber occurring as a powder, the viscosity thereof lowers earlier than the melt-processable resin particles and the tendency toward easy flowing increases. In this case, the transferability of the melt through the screw, cylinder and die in the extruder can be stabilized and rendered better and the moldability/processability can be improved thereby.

The molded article obtained by forming by the above-mentioned method of producing a molding is not particularly restricted but may have various shapes, for example sheet-like; film-like, rod-like; pipe-like; fiber-like and so forth.

The molded article which is obtained by molding the molding composition mentioned above also constitutes an aspect of the present invention.

The uses of the molded article mentioned above are not particularly restricted but, for example, they are suitably used as the molded article strongly required to be excellent mainly in mechanical and dynamic properties and in surface properties although the uses may depend on the melt-processable resin species used.

As the uses of the above-mentioned molded article, there may be mentioned, for example, various films, bags, covering materials; containers for drinks, dishes and other eating utensils, cables, pipes, fibers, bottles, gasoline tanks and other various moldings for industrial use.

EFFECTS OF THE INVENTION

The method of producing a fluororubber fine powder according to the invention, which has the constitution described hereinabove, is not one of the conventional freeze grinding methods but is a method by which the grinding is possible even at ordinary temperature, for instance. The fluororubber fine powder of the invention, which has the constitution described hereinabove, comprises particles relatively uniform in shape and therefore can be used as a processing aid, for instance, and, since it can be readily mixed with melt-processable resins or the like, it can suitably be used as a material for preparing various polymer blends or masterbatches and as a material for producing various moldings. The masterbatch and molding composition of the invention, which have the respective constitutions mentioned above, lower the extrusion pressure and are excellent in moldability or processability.

BEST MODES FOR CARRYING OUT THE INVENTION

The following examples and comparative examples illustrate the present invention in further detail. These examples and comparative examples are, however, by no means limitative of the scope of the invention.

Unless otherwise specified, "part(s)" means "part(s) by mass".

The physical properties of the copolymers prepared in the examples and comparative examples were measured by the following methods.

· Weight average molecular weight [Mw] and number average molecular weight [Mn] measurements
They were measured by carrying out gel permeation chromatography under the following conditions.
Measuring apparatus: LS-8000 (product of Tosoh Corp.)
Column: TSK guard column HXL-H (TSK gel G4000HXL, TSK gel G3000HXL, TSK gel GMHXL-H)
· Detector: differential refractometer
· Developing solvent: tetrahydrofuran
· Measurement temperature: 35°C
· Sample concentration: 5 g/L
· Standard samples: monodisperse polystyrene species = 1.14 (Max), TSK standard POLYSTYRENES, products of Tosoh Corp.
· Copolymer composition

The copolymer composition was measured using a $^{19}$F-NMR apparatus (Bruker model AC300P).

Example 1

A cutter type grinding mill (Rapid R1528, product of Kawata Mfg Co.) was charged with 100 parts of a fluororubber (vinylidene fluoride [VDF]/hexafluoropropylene [HFP] copolymer, copolymerization composition (mole ratio): VDF/HFP = 78/22, number average molecular weight 46,000) and 2 parts of talc (product of Nippon Talc Co.), and the ground product was passed through a screen having openings with a diameter of 3 mm to give a mixture (1) of the fluororubber powder and talc with a particle diameter of 1 to 3 mm.

To the mixture (1) obtained was added 8 parts of the same talc as mentioned above and, after preliminary mixing in a container, a mixture (2) was obtained. Using a metering feeder, the mixture (2) was fed to a disk mill (Turbo Grinder TG300; product of Matsubo Corp.) with a rotor outside diameter of 300 mm. The gap between the disks was adjusted to 0.3 mm, and fine pulverization was carried out at a rotation speed of 6500 rpm. The fluororubber fine powder coming out of the gap was collected by suction by means of a large-scale blower and sent to a recovery apparatus.

The amount of the mixture (2) charged and the airflow were adjusted so that the temperature sensor disposed at the outlet of the disk might not indicate a temperature exceeding 60°C.

Example 2

Using Turbo Grinder TG300 (product of Matsubo) as the disk mill, a fluororubber fine powder was obtained in the same manner as in Example 1 except that the gap between the disks was adjusted to 0.2 mm.

Example 3

Using Disk Mill PM300 (product of Makino Mfg. Co.) as the disk mill, a fluororubber fine powder was obtained in the same manner as in Example 1 except that the rotation speed was set at 9000 rpm and the gap between the disks was adjusted to 0.4 mm.

Example 4

A fluororubber fine powder was obtained in the same manner as in Example 1 except that the mixture (1) obtained in Example 1 was supplemented with 3 parts of talk and the resulting mixture was fed to Turbo Grinder TG300 (product of Matsubo) and the gap between the disks was adjusted to 0.4 mm.

Comparative Example 1

Using a metering feeder, the mixture (2) obtained in Example 1 was fed to a hammer mill (product of Moriroku Co.) placed in an atmosphere in a state frozen with liquefied nitrogen (mill outlet temperature about -100°C) to give a fluororubber fine powder.

Comparative Example 2

A fluororubber fine powder was obtained in the same manner as in Comparative Example 1 except that the amount of the mixture (2) fed from the metering feeder to the grinding mill was reduced and the residence time was prolonged to reduce the particle diameter.

(Evaluations)

The fluororubber fine powders obtained in the respective examples and comparative examples were measured for apparent density, average particle diameter (d50) and particle size distribution according to JIS K 6891-1995.
The measurements for particle size distribution and percent change upon tapping were carried out using a ro-tap sieve shaker (product of Iida Seisakusho).
The results obtained are shown in Table 1.

[Table 1]

| | | Example | | | | Comparative Example | |
|---|---|---|---|---|---|---|---|
| | | 1 | 2 | 3 | 4 | 1 | 2 |
| Amount of talc (parts by mass) | | 10 | 10 | 10 | 5 | 10 | 10 |
| Amount of fluororubber fine powder (parts by mass) | -1700μm | 0 | 0.1 | 0 | 0.2 | 3 | 0.6 |
| | -850μm | 6.6 | 1.6 | 6.1 | 16 | 17.3 | 5.4 |
| | -500μm | 25.4 | 12 | 29.6 | 30.3 | 24.8 | 16 |
| | -300μm | 28.3 | 27 | 35.1 | 25.5 | 19.8 | 20.6 |
| | -250μm | 11.8 | 14.8 | 10.8 | 7.7 | 7.8 | 9.6 |
| | -180μm | 10.7 | 16.9 | 9.5 | 8.5 | 8.3 | 11.2 |
| | -0μm | 17.2 | 27.7 | 8.9 | 11.9 | 18.9 | 36.6 |
| Average particle diameter of fluororubber fine powder (d50, μm) | | 373 | 268 | 419 | 472 | 451 | 261 |

(continued)

| | Example | | | | Comparative Example | |
|---|---|---|---|---|---|---|
| | 1 | 2 | 3 | 4 | 1 | 2 |
| Amount of fluororubber fine powder (1±0.3) d50* (parts by mass) | 35.3 | 36.3 | 40.3 | 31.4 | 24.4 | 24.6 |
| Apparent density | 0.86 | 0.87 | 0.87 | 0.82 | 0.89 | 0.86 |
| Percent change upon tapping (%) | 83 | 81 | 79 | 88 | 74 | 76 |
| * Amount of fluororubber fine powder (1±0.3)d50 = amount of fluororubber fine powder particles having a particle diameter of 70-130% of the average particle diameter. | | | | | | |

In spite of the grinding operation at ordinary temperature, the fluororubber fine powders of Examples 1 to 4 each were equivalent in average particle diameter and apparent density to the freeze ground products. The fluororubber fine powders of Examples 1 to 4 showed smaller changes upon tapping as compared with the products of Comparative Examples 1 and 2, indicating that they were uniform in particle shape.

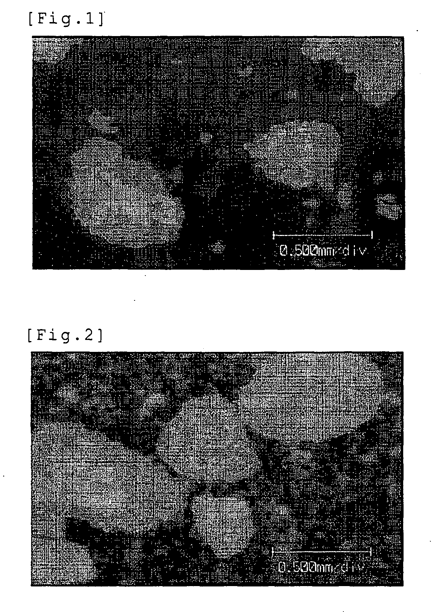

Furthermore, the fluororubber fine powder obtained in Example 1 and that obtained in Comparative Example 1 were each photographed at a magnification of 50. The fluororubber fine powder particles in Example 1 (Fig. 1) were uniform in shape as compared with those in Comparative Example 1 (Fig. 2) and it was further revealed that, in Example 1, the talc was uniformly adhering to the fluororubber fine powder particle surface.

INDUSTRIAL APPLICABILITY

The method of producing a fluororubber fine powder according to the invention, which has the constitution described hereinabove, is not one of the conventional freeze grinding methods but is a method by which the grinding is possible even at ordinary temperature, for instance. The fluororubber fine powder of the invention, which has the constitution described hereinabove, comprises particles relatively uniform in shape and therefore can be used as a processing aid, for instance, and, since it can be readily mixed uniformly with melt-processable resins or the like, it can suitably be used as a material for preparing various polymer blends or masterbatches and as a material for producing various moldings. The masterbatch and molding composition of the invention, which have the respective constitutions mentioned above, lower the extrusion pressure and are excellent in moldability or processability.

BRIEF DESCRIPTION OF THE DRAWINGS

[Fig. 1] This figure is a photograph at a magnification of 50 of the fluororubber fine powder obtained in Example 1.
[Fig. 2] This figure is a photograph at a magnification of 50 of the fluororubber fine powder obtained in Comparative Example 1.

**Claims**

1.   A method of producing a fluororubber fine powder
    comprising fine pulverization step of subjecting a fluororubber powder to fine pulverization treatment at a temperature of an atmosphere ranging from a temperature not lower than the glass transition temperature of a fluororubber constituting said fluororubber powder to a temperature higher by 100°C than said glass transition temperature.

2.   The method of producing a fluororubber fine powder according to claim 1,
    wherein the fine pulverization treatment is carried out with simultaneous feeding of an anti-blocking agent.

3.   The method of producing a fluororubber fine powder according to claim 1 or 2,
    wherein the fine pulverization treatment is carried out using a disk mill.

4.   The method of producing a fluororubber fine powder according to claim 1, 2 or 3,
    wherein the fluororubber fine powder has an average particle diameter of 100 to 800 μm.

5. A fluororubber fine powder
containing 25 to 65% by mass of particles having a particle diameter of 0.7 to 1.3 times the average particle diameter relative to the whole particles.

6. The fluororubber fine powder according to claim 5,
wherein the average particle diameter is 100 to 800 $\mu$m.

7. A molding composition comprising a melt-processable resin and a processing aid,
said processing aid comprising the fluororubber fine powder according to claim 5 or 6.

8. The molding composition according to claim 7,
wherein the melt-processable resin is a polyolefin resin.

9. A masterbatch comprising the fluororubber fine powder according to claim 5 or 6 and a melt-processable resin (A).

10. The masterbatch according to claim 9,
wherein the melt-processable resin is a polyolefin resin.

11. A molded article being obtained by molding the molding composition according to claim 7 or 8.

[Fig.1]

[Fig.2]

<table>
<tr><td colspan="2" align="center">**INTERNATIONAL SEARCH REPORT**</td><td>International application No.<br>PCT/JP2006/301567</td></tr>
</table>

A.  CLASSIFICATION OF SUBJECT MATTER
*C08J3/12*(2006.01), *C08J3/22*(2006.01), *C08L23/00*(2006.01),
*C08L27/12*(2006.01)

According to International Patent Classification (IPC) or to both national classification and IPC

B.  FIELDS SEARCHED

Minimum documentation searched (classification system followed by classification symbols)
C08J3/12-16

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2003-2979 A  (Daikin Industries, Ltd.),<br>08 January, 2003 (08.01.03),<br>Claims 1, 6; Par. No. [0019]<br>(Family: none) | 1-11 |
| A | JP 10-279814 A  (Asahi Chemical Industry Co.,<br>Ltd.),<br>20 October, 1998 (20.10.98),<br>Claim 1; Par. Nos. [0045], [0046]<br>(Family: none) | 1-11 |

☐ Further documents are listed in the continuation of Box C.　　☐ See patent family annex.

| | |
|---|---|
| *  Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>17 February, 2006 (17.02.06) | Date of mailing of the international search report<br>28 February, 2006 (28.02.06) |
|---|---|
| Name and mailing address of the ISA/<br>Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H01139657 B
- JP 50084650 A

- JP 52076360 A

**Non-patent literature cited in the description**

- Fussojushi Handobukku. Nikkan Kogyo Shimbun Ltd, 30 November 1990, vol. 592, 605-606

- Saishin Chobifunsai Purosesu Gijutu Sogo Siryoshu. ShinGijutsu Joho Center, 31 March 1985, 8-10